# EUROPÄISCHE PATENTSCHRIFT

(11) **EP 3 695 967 B1**
(45) Veröffentlichungstag und Bekanntmachung des Hinweises auf die Patenterteilung: **12.01.2022**
(21) Anmeldenummer: 20157653.5
(22) Anmeldetag: 17.02.2020
(51) Int. Cl.: B32B 37/15, B29C 48/15, B42D 25/45, G06K 19/077

(54) **VERFAHREN UND VORRICHTUNG ZUR HERSTELLUNG EINES FLÄCHIGEN INFORMATIONSTRÄGERS AUS KUNSTSTOFF**
METHOD AND DEVICE FOR PRODUCING A FLAT INFORMATION CARRIER FROM SYNTHETIC MATERIAL
PROCÉDÉ ET DISPOSITIF DE FABRICATION D'UN SUPPORT D'INFORMATIONS PLAN EN MATIÈRE PLASTIQUE

(30) Priorität: 15.02.2019 DE 102019103944
(43) Veröffentlichungstag der Anmeldung: 19.08.2020
(73) Patentinhaber: Atlantic Zeiser GmbH, 78576 Emmingen-Liptingen (DE)
(72) Erfinder: BERNDTSSON, Anders, 42934 Kullavik (SE)
(74) Vertreter: Beyer, Carsten

(56) Entgegenhaltungen:
- DE-A1- 19 805 031
- US-A1- 2006 011 288

## Beschreibung

Die vorliegende Erfindung betrifft ein Verfahren zur Herstellung eines flächigen Informationsträgers aus Kunststoff nach dem Oberbegriff von Anspruch 1.

Danach umfasst das Verfahren zur Herstellung eines flächigen Informationsträgers aus Kunststoff die folgenden Schritte: Bereitstellen einer Kunststofffolie; Bedrucken der Kunststofffolie mit Informationen; Extrudieren eines bandförmigen Trägers aus einer erhitzten, fließfähigen Kunststoffmasse; Zusammenführen der Kunststofffolie und des frisch extrudierten Trägers; Laminieren der Kunststofffolie zusammen mit dem frisch extrudierten Träger zu einem Laminat; Ausstanzen, Zuschneiden oder sonstiges Bereitstellen des Informationsträgers aus dem Laminat; wobei zwei Kunststofffolien bereitgestellt werden, wobei eine erste Kunststofffolie der Oberseite und eine zweite Kunststofffolie der Unterseite des frisch extrudierten Trägers zugeführt und jeweils dort zusammen mit dem Träger laminiert werden.

Ferner betrifft die Erfindung eine Vorrichtung zur Herstellung eines entsprechenden flächigen Informationsträgers nach dem Oberbegriff von Anspruch 9.

Danach umfasst die Vorrichtung zur Herstellung eines flächigen Informationsträgers aus Kunststoff die folgenden Funktionseinheiten: eine Zuführeinheit zum Bereitstellen einer Kunststofffolie; einen Drucker zum Bedrucken der Kunststofffolie mit Informationen; einen Extruder zum Extrudieren eines bandförmigen Trägers aus einer erhitzten, fließfähigen Kunststoffmasse; eine Zusammenführeinheit zum Zusammenführen der Kunststofffolie und des frisch extrudierten Trägers; eine Laminiereinheit zum Laminieren der Kunststofffolie zusammen mit dem frisch extrudierten Träger zu einem Laminat; eine Bereitstelleinheit zum Ausstanzen, Zuschneiden oder sonstigen Bereitstellen des Informationsträgers aus dem Laminat.

Bei einem solchen flächigen Informationsträger kann es sich beispielsweise um eine Bankkarte, insbesondere EC-Karte, Geldkarte, Kreditkarte oder eine sonstige als Zahlungsmittel dienende Karte handeln. Ferner kann es sich um eine Karte zur Identifizierung, und dabei insbesondere um einen Personalausweis, einen Führerschein oder um sonstige Ausweise oder offizielle Dokumente handeln. Weit verbreitet sind ferner genannte flächige Informationsträger als Kunden-, Einkaufs-, Gesundheits- oder Vorteilskarten, als Schlüsselkarte für Zutrittsberechtigungen, oder dergleichen.

Es ist bekannt, genannte flächige Informationsträger zu personalisieren, z.B. durch personalisiertes Aufbringen einer Zeichenfolge und/oder einer Grafik auf den Informationsträger, bspw. durch ein Druckverfahren. Weiterhin verbreitet ist ebenfalls das "Hochprägen" personalisierter Daten, z.B. bei Kreditkarten.

Seit langem bekannt ist ebenfalls die Speicherung bzw. die Abrufbarkeit von personalisierten Informationen auf flächigen Informationsträgern. Hierzu sind bspw. Kunststoff- bzw. Plastikkarten mit der älteren Magnetstreifentechnik zu nennen, ferner sog. Smart- oder Chipkarten mit einem eingebauten integrierten Schaltkreis, und insbesondere auch RFID-Chipkarten mit einem eingebauten RFID-Transponder.

Ferner ist bekannt, genannte Grafiken und/oder Zeichenfolgen durch die Aufbringung einer transparenten Folie auf die Kunststoffkarte zu schützen, bspw. vor Abrieb oder auch vor Nachahmung oder Fälschung. In der Regel wird eine solche Folie auf den Kunststoffträger auflaminiert.

EP 2 286 995 A1 offenbart ein Verfahren sowie eine Vorrichtung zum Aufbringen einer Abdeckung auf einer Karte unter Verwendung eines Haftmittels, welches mit Wärmestrahlung beaufschlagt wird. Unter der Wirkung des erwärmten Haftmittels wird die Abdeckung dann durch Druckbeaufschlagung mit der Karte verbunden.

DE 10 2014 204 342 A1 offenbart ein Verfahren zum Personalisieren eines flächigen Informationsträgers mit einer erhabenen Zeichenfolge oder Grafik. Ein zu personalisierender Informationsträger wird bereitgestellt. Danach erfolgt ein Aufdrucken einer Zeichenfolge mit Klebemittel auf den Informationsträger oder auf eine Folie. Die Folie wird auf den Informationsträger im Klebemittelbereich aufgebracht und das Klebemittel wird unter Einwirkung elektromagnetischer Strahlung ausgehärtet. Danach erfolgt ein Abziehen der Folie, so dass die auf der Zeichenfolge haftenden Abschnitte der Folie auf der Zeichenfolge verbleiben und diese be- oder überdecken.

DE 10 2005 062 396 A1 zeigt ein Verfahren und eine Vorrichtung zum Aufbringen einer Folie auf einen Träger, bspw. auf eine Kunststoffkarte, wobei der Träger irreversibel mit der Folie zumindest partiell überzogen wird. Dabei sind die folgenden Schritte charakteristisch: Bereitstellen des Trägers, Beschichten des Trägers oder der Folie mit einer dünnen Schicht eines transparenten, unter Einwirkung elektromagnetischer Wellen aushärtenden Haftvermittlers, Zusammenbringen von Träger und Folie, und Aushärten des Haftvermittlers unter Einwirkung elektromagnetischer Wellen.

In jedem Fall ist in diesem bekannten Stand der Technik ein bereits fertiggestellter Träger bereitzustellen, bevor dieser durch weitere Verfahrensschritte personalisiert und ggf. durch eine weiter aufgebrachte Folie geschützt werden kann. Eine Personalisierung findet demnach immer unabhängig vom Herstellungsprozess für den Träger (Kern) des Informationsträgers statt, was eine geringe Flexibilität und Spontanität des gesamten Herstellungsverfahrens und einen erhöhten Aufwand und Kosten mit sich bringt.

US 2006/011288 A1 schlägt eine Laminiervorrichtung und ein Verfahren zur Herstellung von IC-Chips vor. Dabei wird eines der zweiten und dritten Substrate zum Abdichten einer integrierten Dünnschichtschaltung einem ersten Substrat mit mehreren Dünnschichtintegrationsschaltungen zugeführt, während es in einem erhitzten und geschmolzenen Zustand extrudiert wird, und werden weitere Walzen verwendet zum Zuführen des anderen Substrats, zur Aufnahme von IC-Chips, und zum Trennen und Versiegeln.

DE 198 05 031 A1 offenbart ein Verfahren und eine Vorrichtung zum Herstellen von Chipkarten aus mehrlagig laminierten Folien bzw. eine entsprechende Vorrichtung und einen dafür einsetzbaren Laminator, bei dem auf die Schichten, die das spätere Laminieren unterstützen, größtenteils verzichtet wird, wobei zunächst im Koextrusionsverfahren einzelne Folienstreifen kontinuierlich zusammengebracht sowie anschließend in einem Laminator kontinuierlich laminiert werden, vor dem Laminieren ein Datenträger zwischen die Folienstreifen eingebracht wird, und der abgekühlte mehrlagige Streifen durch Stanzen, Ablängen, Lasern o. dgl. in Chipkarten vereinzelt wird. Diese Druckschrift zeigt die hier gattungsgemäßen Gegenstände, wobei ein Bedrucken im Herstellungsverfahren nicht explizit vorgesehen ist.

Der vorliegenden Erfindung liegt die Aufgabe zugrunde, die sich aus dem Stand der Technik ergebenden Nachteile zu überwinden.

Ferner liegt die Aufgabe zugrunde, ein Verfahren und eine Vorrichtung zur Herstellung eines flächigen Informationsträgers aus Kunststoff anzugeben, welche eine kostengünstige, flexible und spontane Herstellung eines flächigen Informationsträgers gewährleisten.

Eine Lösung mindestens einer der vorstehend genannten Aufgaben leistet ein eingangs genanntes Verfahren mit den kennzeichnenden Merkmalen des Anspruchs 1.

Danach ist das Verfahren so weitergebildet, dass die erste Kunststofffolie und die zweite Kunststofffolie dadurch bereitgestellt werden, dass eine einzige Folienbahn bereitgestellt und in der Bahnrichtung gesehen in zwei Hälften geschlitzt wird, wobei die erste Hälfte der Folienbahn die erste Kunststofffolie und die zweite Hälfte der Folienbahn die zweite Kunststofffolie bildet.

Eine Lösung mindestens einer der vorstehend genannten Aufgaben leistet ferner eine eingangs genannte Vorrichtung mit den kennzeichnenden Merkmalen des Anspruchs 9.

Danach ist die Vorrichtung so weitergebildet, dass eine einzige Zuführeinheit und das Bereitstellen von zwei Kunststofffolien vorgesehen sind, wobei vor der Zusammenführeinheit eine Schlitzeinheit angeordnet ist, durch die eine erste Kunststofffolie und eine zweite Kunststofffolie dadurch bereitstellbar sind, dass eine einzige von der Zuführeinheit bereitgestellte Folienbahn in der Bahnrichtung gesehen in zwei Hälften geschlitzt wird, wobei die erste Hälfte der Folienbahn die erste Kunststofffolie und die zweite Hälfte der Folienbahn die zweite Kunststofffolie bildet.

Vorteilhafte Ausgestaltungen und Weiterbildungen der Erfindung sind Gegenstand der jeweils nachgeordneten Ansprüche.

Erfindungsgemäß ist sichergestellt, dass zwischen Ober- und Unterseite keinerlei Unterschiede im Material oder dessen Eigenschaften existieren.

Das erfindungsgemäße Verfahren spart in Bezug auf das Herstellen von mit Informationen versehener bzw. personalisierter Informationsträger mehrere Arbeitsschritte ein. Mit dem erfindungsgemäßen Verfahren ist es möglich, innerhalb eines gemeinsamen Herstellungsprozesses sofort und unmittelbar einen mit individualisierten Informationen versehenen bzw. personalisierten flächigen Informationsträger bereitzustellen. Die für jeden hergestellten Informationsträger vorgesehenen, sich unterscheidenden gedruckten Informationen können durch den integrierten Druckvorgang sofort umgesetzt werden, so dass in einem laufenden Verfahren eine Vielzahl von Informationsträgern mit voneinander erheblich abweichenden gedruckten Informationen, insbesondere in Bezug auf eine Personalisierung, herstellbar sind.

Dabei müssen keine bereits hergestellten Träger zur Verfügung stehen, welche beim Personalisierungsschritt dann ggf. in nicht ausreichender Menge zur Verfügung stehen, oder andererseits ggf. vorab in zu großer Menge beschafft worden sind.

Ferner erlaubt es das Verfahren in besonders raffinierter Weise, die beim Extrudieren (Herstellen) des Trägers bestehende Hitze des extrudierten Materials unmittelbar weiter zu nutzen, nämlich zum Laminieren einer oder mehrerer mit Informationen bedruckter Kunststofffolien auf den unmittelbar im Verfahren hergestellten (extrudierten) Träger.

Die Kunststofffolie kann dabei während des Verfahrens (inline) mit den erforderlichen bzw. gewünschten Informationen bedruckt und unmittelbar mit dem frisch extrudierten Träger zusammengeführt werden. Hierzu kann die Folie vorgefertigt sein oder alternativ ebenfalls im Verfahren hergestellt werden. Die Folie kann für sich gesehen in einem Extrusionsprozess hergestellt, ggf. abgekühlt, bedruckt und dem Träger zugeführt werden.

Alternativ kann die zuzuführende Folie bspw. auf einer Rolle gespeichert werden, um dann abhängig von der Geschwindigkeit bzw. der Stabilität des Extrusionsprozesses für den Träger passgenau mit dem Träger zusammengeführt zu werden.

Mit dem erfindungsgemäßen Verfahren lassen sich insbesondere eingangs genannte Kunststoff- bzw. Plastikkarten, Smart Cards oder Chipkarten, insbesondere RFID-Chipkarten, herstellen. Allgemein lassen sich jedoch alle flächigen Informationsträger herstellen, welche von der Definition in den unabhängigen Ansprüchen umfasst sind.

Im Folgenden werden die erfindungsgemäßen Aspekte weiter erörtert, wozu teilweise auf nicht limitierende vorteilhafte Ausgestaltungen und Weiterbildungen der Erfindung Bezug genommen wird. Die Merkmale vorteilhafter Weiterbildungen lassen sich dabei einzeln oder auch in beliebiger Kombination realisieren, wodurch weitere vorteilhafte Ausgestaltungen der Erfindung geschaffen werden.

Im Rahmen der gesamten vorliegenden Erörterung von Ausgestaltungen, Weiterbildungen und Ausführungsbeispielen des erfindungsgemäßen Verfahrens werden gleichzeitig auch die erfindungsgemäße Vorrichtung sowie deren vorteilhafte Ausgestaltungen und Weiterbildungen beschrieben. Gleichzeitig werden mit der Erörterung von Ausgestaltungen, Weiterbildungen und Ausführungsbeispielen der erfindungsgemäßen Vorrichtung gleichzeitig auch das erfindungsgemäße Verfahren sowie dessen vorteilhafte Ausgestaltungen und Weiterbildungen beschrieben. Die hiermit beschriebenen Gegenstände liegen dabei ausdrücklich ebenfalls im Rahmen der vorliegenden Erfindung.

Vorzugsweise wird das Laminieren der Kunststofffolien zusammen mit dem Träger unter mechanischem Druck, insbesondere zwischen zwei Walzen, durchgeführt.

Weiter bevorzugt können diese Walzen gekühlt werden, um den Prozess stabil zu halten.

In einer besonders bevorzugten Weiterbildung des Verfahrens erfolgt über die genannten Walzen gleichzeitig eine Einstellung der Dicke des Laminats und damit auch des resultierenden flächigen Informationsträgers.

Stromabwärts der zum Laminieren und ggf. zur Einstellung der Dicke verwendeten Walzen kann das Laminat vorzugsweise weiteren Kühlwalzen zugeleitet werden. Alternativ oder zusätzlich kann das Laminat zur Abkühlung einem Kühlbad, insbesondere Wasserbad, zugeleitet werden.

Ist das Laminat ausreichend abgekühlt, können hieraus vorzugsweise durch Ausstanzen oder Ausschneiden die gewünschten flächigen Informationsträger bereitgestellt werden, bspw. als Plastikkarten im bekannten Scheckkartenformat.

In Bezug auf den Laminierprozess zwischen Kunststoffträger und Kunststofffolien ist eine Ausführungsform des Verfahrens besonders vorteilhaft, bei der das Laminieren der Kunststofffolien zusammen mit dem Träger unter Ausnutzung der Restwärme und/oder der nach der Extrusion noch bestehenden Fließfähigkeit des frisch extrudierten Trägers durchgeführt wird. Insofern kann insbesondere ein Heißlaminieren stattfinden, wobei ggf. komplett auf einen weiteren Energieeintrag verzichtet werden kann.

Alternativ oder zusätzlich, in einer weiteren Ausführungsform, kann vor oder bei dem Zusammenführen der Kunststofffolien und des frisch extrudierten Trägers ein thermoplastischer Klebstoff und/oder ein UV-härtbarer Klebstoff zwischen Kunststofffolie und Träger gegeben werden.

In einer vorteilhaften Weiterbildung des Verfahrens weist das Zusammenführen der Kunststofffolien und des frisch extrudierten Trägers das Auflegen der Kunststofffolie auf eine Seite des Trägers auf. Besonders bevorzugt ist dabei, auf beide Seiten des Trägers jeweils eine Kunststofffolie aufzulegen, um einen flächigen Informationsträger mit sowohl personalisierter Vorderseite als auch Rückseite bereitstellen zu können. Hierauf wird im Folgenden noch näher eingegangen.

In einer vorteilhaften Weiterbildung des Verfahrens wird eine zumindest teilweise transparente Kunststofffolie bereitgestellt, und wird die Kunststofffolie auf der dem Träger zugewandten Seite bedruckt. Somit kann die Kunststofffolie im Laminat mit dem Träger das Druckbild abdecken und somit schützen, da sich der Druck im Inneren des Laminats, nämlich zwischen Träger und Kunststofffolie, befindet. Insofern kann die Folie auf der dem Träger zugewandten Seite spiegelbildlich bedruckt werden, damit Schriftzeichen oder Grafiken von der dem Träger abgewandten Seite der Folie aus lesbar bzw. erkennbar sind.

Vorzugsweise umfasst das Bereitstellen einer Kunststofffolie deren Herstellung, insbesondere deren Extrusion in den laufenden Prozess. Hierbei ist vorteilhaft, eine frisch extrudierte bzw. geblasene Folie vor dem Druckvorgang abzukühlen.

Es ist weiter bevorzugt, dass die erste Kunststofffolie und die zweite Kunststofffolie jeweils auf der dem Träger zugewandten Seite mit Informationen in gespiegelter Anordnung bedruckt werden, wobei die erste Kunststofffolie die Vorderseite und die zweite Kunststofffolie die Rückseite des flächigen Informationsträgers bildet.

In einer weiteren vorteilhaften Ausgestaltung wird die Folienbahn vor dem Aufschlitzen bedruckt, wobei die erste Hälfte der Folienbahn mit der späteren Vorderansicht und die zweite Hälfte der Folienbahn mit der späteren Rückansicht des flächigen Informationsträgers bedruckt wird, und wobei jede Hälfte der Folienbahn so umgelenkt wird, dass die bedruckte Seite der ersten Hälfte der Oberseite und die bedruckte Seite der zweiten Hälfte der Unterseite des frisch extrudierten Trägers zugeführt werden. Diese Ausgestaltung hat den Vorteil, dass sowohl die Ober- als auch die Unterseite des Informationsträgers in einem Druckvorgang erschaffen werden können, somit können ein Versatz bzw. Diskrepanzen zwischen dem Druckbild auf Vorder- und Rückseite vermieden werden.

Vorzugsweise wird bzw. werden vor dem Bedrucken der Kunststofffolien mit Informationen auf der dem Träger zugewandten oder abgewandten Seite der Kunststofffolie ein Hologramm, eine dünne Metallschicht, oder dergleichen Identifikationsmerkmale, insbesondere mittels Heißfolienprägung oder mittels Kaltfolienprägung, angebracht bzw. eingearbeitet. Damit kann der Informationsträger mit weiteren personalisierten Informationen und/oder mit Sicherheitsmerkmalen ausgestattet werden.

Alternativ oder zusätzlich kann vor dem Zusammenführen der Kunststofffolien und des frisch extrudierten Trägers auf der dem Träger zugewandten oder abgewandten Seite der Kunststofffolie ein programmierbarer Magnetstreifen angebracht und ggf. programmiert werden. Solche Magnetstreifen sind für sich gesehen bekannt.

In einer weiteren vorteilhaften Ausführungsform des Verfahrens wird beim Extrudieren des bandförmigen Trägers jeweils ein Chip, insbesondere ein RFID-Chip oder dergleichen Transponder, in den bandförmigen Träger eingebaut.

Dabei werden bevorzugt zwei Extruder eingesetzt, wobei der erste Extruder - in Bandrichtung gesehen - eine obere Hälfte des bandförmigen Trägers und der zweite Extruder eine untere Hälfte des bandförmigen Trägers extrudiert, der Chip zwischen den beiden Hälften eingesetzt wird, und die beiden Hälften mitsamt dem dazwischen angeordneten Chip zusammen zu dem bandförmigen Träger laminiert werden.

Dieser Laminierprozess wird vorzugsweise zusammen mit dem Laminieren der Kunststofffolien mit dem frisch extrudierten Träger durchgeführt.

Die einzubauenden Chips, insbesondere RFID-Chips, können dem Prozess vorzugsweise auf einem fortlaufenden Band angeordnet zugeführt werden.

Bevorzugt ist das Verfahren so ausgestaltet, dass die einzubauenden Chips, insbesondere RFID-Chips, erst eingebaut werden, insbesondere erst zwischen die o.g. Hälften des Trägers eingelegt werden, nachdem das Verfahren stabil läuft. So lässt sich das kostspielige Entstehen von Ausschuss an Chips vermeiden. Ein etwaiger Ausschuss an Träger- und Folienmaterial lässt sich hingegen problemlos recyceln.

Im Zusammenhang mit einem Verfahren, bei dem RFID-Chips in das Trägermaterial eingebaut werden, ist eine Ausführungsform bevorzugt, in der die Position der RFID-Antenne fallweise bestimmt wird, und die Position bzw. die Ausrichtung des Druckbilds auf der dem betreffenden Träger konkret zuzuführenden Kunststofffolie unmittelbar hierauf angepasst wird, so dass selbst bei Abweichungen in der Positionierung der RFID-Antenne zwischen verschiedenen Abschnitten des bandförmigen Trägers jeweils ein individuell hierauf angepasstes Druckbild mit Informationen bereitgestellt und auflaminiert wird.

Bevorzugt werden die Antennen einzubauender RFID-Chips vor dem Einbau bzw. Einschweißen in den Träger getestet, und der betreffende Chip im Falle eines Defekts aussortiert. Falls ein Aussortieren defekter Chips nicht möglich ist, kann der Drucker vorzugsweise die Position des defekten Chips überspringen und die vorgesehene Information erst an der Stelle des nächsten Chips auf die bereitgestellte Kunststofffolie aufbringen.

Fehlstücke und Ausschuss von Träger- und/oder Folienmaterial werden vorzugsweise zerkleinert und zurück in den Extrusionsprozess für den Träger geführt.

Für das Recycling kann vorzugsweise ein dritter Extruder vorgesehen werden, welcher Schmelze aus solchem Material zwischen eine oben bereits erwähnte obere und unter Hälfte des Trägers, welche jeweils durch einen Extruder ausgebracht werden, fördern kann. Dies hat den Vorteil, dass damit auch durch Tinte verunreinigtes Material recycelt werden kann, da das recycelte Material im Endeffekt im Inneren des Trägers zwischen zwei Lagen aus frischem Kunststoff angeordnet ist.

In einer ersten vorteilhaften Ausführungsform der erfindungsgemäßen Vorrichtung ist zwischen dem Drucker und der Zusammenführeinheit ein Trockner und/oder eine Fixiereinheit zum Trocknen bzw. zum Fixieren eines auf die Folie aufgebrachten Drucks angeordnet.

In einer bevorzugten Weiterbildung der Vorrichtung weist die Laminiereinheit zwei gegeneinander gerichtete, mit Druck beaufschlagbare Walzen auf, insbesondere wobei die Walzen kühlbar sind.

Vorzugsweise können stromabwärts der Laminiereinheit eine oder mehrere weitere Paare von Kühlwalzen angeordnet sein.

Alternativ oder zusätzlich kann stromabwärts der Laminiereinheit ein Kühlbad, insbesondere Wasserbad, zum Abkühlen des frisch hergestellten Laminats aus Träger und Kunststofffolien angeordnet sein. Aus dem ausreichend abgekühlten Laminat kann dann bspw. durch Zuschneiden, Ausschneiden oder Ausstanzen der flächige Informationsträger bereitgestellt werden.

Besonders bevorzugt ist eine Ausführungsform der Vorrichtung, bei der die Zusammenführeinheit und die Laminiereinheit in einer gemeinsamen Einheit realisiert sind. Hierbei kann es sich insbesondere um ein Walzenpaar handeln, welches einerseits das Extrudat (Träger), insbesondere zentral, aufnimmt und, insbesondere seitlich, eine oder zwei Kunststofffolien heranführt, und danach durch Druckbeaufschlagung zusammen mit dem Träger laminiert.

Vorzugsweise ist die Zusammenführeinheit so eingerichtet, dass ein Zusammenführen der Kunststofffolien und des frisch extrudierten Trägers unmittelbar am oder nach dem Auslass des Extruders realisiert oder realisierbar ist. Somit kann eine kompakte Vorrichtung bei gleichzeitig maximaler Ausnutzung der Hitze des Extrudats (Träger) realisiert werden.

In einer weiteren vorteilhaften Ausführungsform der Vorrichtung ist die Zusammenführeinheit so eingerichtet, dass diese beim Zusammenführen einer Kunststofffolie und des frisch extrudierten Trägers die Kunststofffolie auf eine Seite des Trägers auflegt.

Vorzugsweise können zwischen der Schlitzeinheit und der Zusammenführeinheit Umlenkeinheiten angeordnet sein, durch die jede Hälfte der Folienbahn so umlenkbar ist, dass die bedruckte Seite der ersten Hälfte der Oberseite und die bedruckte Seite der zweiten Hälfte der Unterseite des frisch extrudierten Trägers zuführbar sind.

In einer weiteren vorteilhaften Ausführungsform der erfindungsgemäßen Vorrichtung sind zwei Extruder vorgesehen, welche so eingerichtet sind, dass durch den ersten Extruder - in Bandrichtung gesehen - eine obere Hälfte des bandförmigen Trägers, und durch den zweiten Extruder eine untere Hälfte des bandförmigen Trägers extrudierbar sind.

Dabei ist die Vorrichtung bevorzugt so eingerichtet, dass beim Extrudieren des bandförmigen Trägers jeweils ein Chip, insbesondere ein RFID-Chip oder dergleichen Transponder, in den bandförmigen Träger einbaubar ist, insbesondere wobei der Chip zwischen den beiden Hälften einsetzbar ist, und die beiden Hälften mitsamt dem dazwischen angeordneten Chip zusammen zu dem bandförmigen Träger laminierbar sind.

In Bezug auf die weitere Erläuterung von Merkmalen und Vorteilen der oben angegebenen vorteilhaften Ausgestaltungen und Weiterbildungen der erfindungsgemäßen Vorrichtung wird im Übrigen zur Vermeidung von Wiederholungen vollumfänglich auf die entsprechenden Ausführungen zu den Merkmalen des erfindungsgemäßen Verfahrens bzw. dessen vorteilhafter Ausgestaltungen verwiesen.

### Figuren

Ergänzend bzw. zusätzlich zu den bereits erörterten vorteilhaften Ausgestaltungen und Weiterbildungen der Lehre werden in der Zeichnung im Umfang der Figuren 1 und 2 dargestellte nicht erfindungsgemäße Beispiele von Vorrichtungen zur Herstellung eines flächigen Informationsträgers sowie ein in Figur 3 dargestelltes Ausführungsbeispiel der erfindungsgemäßen Vorrichtung und des erfindungsgemäßen Verfahrens im Folgenden näher erläutert. Die anhand der Zeichnung erörterten Beispiele schränken die Erfindung jedoch nicht auf die gezeigten Beispiele ein. Bei der Erörterung des Ausführungsbeispiels anhand der Zeichnung werden auch im Allgemeinen bevorzugte Ausgestaltungen und Weiterbildungen der Lehre aufgezeigt.

Weiterbildungen der vorstehend beschriebenen vorteilhaften Ausgestaltungen mit Merkmalen der nachstehenden Ausführungsbeispiele bilden dabei genau wie Weiterbildungen der nachstehend beschriebenen Ausführungsbeispiele mit Merkmalen der vorstehend beschriebenen Ausgestaltungen ausdrücklich weitere vorteilhafte Ausgestaltungen der Erfindung, und sind damit Teil der vorliegenden Offenbarung.

Es zeigen:

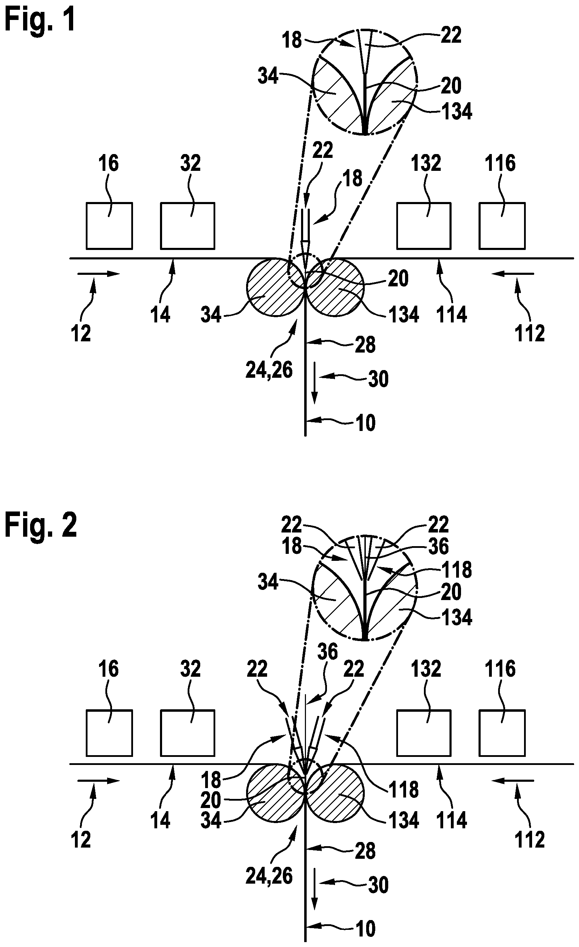

Figur 1 ein erstes nicht erfindungsgemäßes Beispiel einer Vorrichtung zur Herstellung eines flächigen Informationsträgers in einer schematischen Darstellung,
Figur 2 ein zweites nicht erfindungsgemäßes Beispiel einer solchen Vorrichtung in einer schematischen Darstellung,

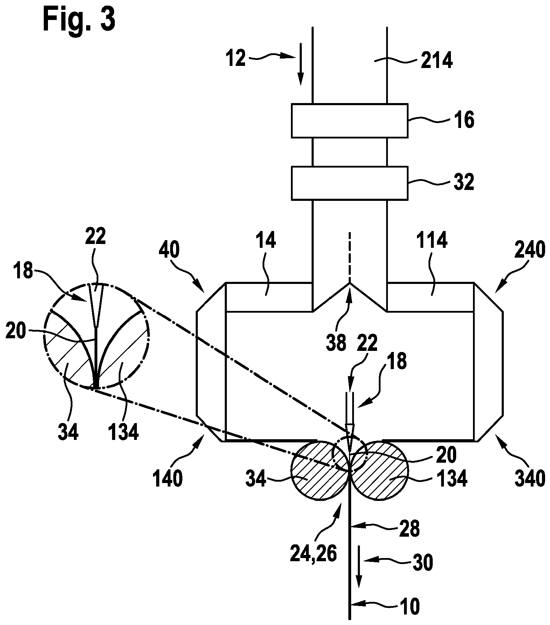

Figur 3 ein bevorzugtes Ausführungsbeispiel der erfindungsgemäßen Vorrichtung in einer schematischen Darstellung,

**Fig. 1** zeigt ein erstes nicht erfindungsgemäßes Beispiel einer Vorrichtung zur Herstellung eines flächigen Informationsträgers in einer schematischen seitlichen und teilweise geschnittenen Darstellung. Dieses Beispiel dient zum weiteren Verständnis der vorliegenden Erfindung und diesbezüglicher Merkmale.

Die Vorrichtung zur Herstellung eines flächigen Informationsträgers 10 aus Kunststoff umfasst die folgenden Funktionseinheiten: eine erste Zuführeinheit 12 zum Bereitstellen einer ersten Kunststofffolie 14, eine zweite Zuführeinheit 112 zum Bereitstellen einer zweiten Kunststofffolie 114, einen ersten Drucker 16 zum Bedrucken der ersten Kunststofffolie 14 mit Informationen, einen zweiten Drucker 116 zum Bedrucken der zweiten Kunststofffolie 114 mit Informationen, einen Extruder 18 zum Extrudieren eines bandförmigen Trägers 20 aus einer erhitzten, fließfähigen Kunststoffmasse 22, eine Zusammenführeinheit 24 zum Zusammenführen der Kunststofffolien 14, 114 mit dem frisch extrudierten Träger 20, eine Laminiereinheit 26 zum Laminieren der Kunststofffolien 14, 114 zusammen mit dem frisch extrudierten Träger 20 zu einem Laminat 28, eine Bereitstelleinheit 30 zum Ausstanzen, Zuschneiden oder sonstigen Bereitstellen des Informationsträgers 10 aus dem Laminat 28.

Hier ist zwischen dem Drucker 16, 116 und der Zusammenführeinheit 24 jeweils ein Trockner 32, 132 zum Trocknen eines auf die Folie 14, 114 aufgebrachten Drucks (bspw. eine Zeichenfolge und/oder grafische Informationen, insbesondere zur Personalisierung des flächigen Informationsträgers 10) angeordnet.

Durch die Drucker 16, 116 können die hergestellten Informationsträger 10 inline und unmittelbar im Verfahren mit lesbaren bzw. erkennbaren Informationen versehen und somit personalisiert werden.

Hier weist die Laminiereinheit 26 zwei gegeneinander gerichtete, mit Druck beaufschlagbare Walzen 34, 134 auf, wobei die Walzen 34, 134 zur Stabilisierung des Prozesses kühlbar sind. Ferner wird deutlich, dass vorliegend die Zusammenführeinheit 24 und die Laminiereinheit 26 in einer gemeinsamen Einheit realisiert sind, nämlich in Form der beiden Walzen 34, 134. Die Walzen 34, 134 übernehmen die Kunststofffolie 14, 114 von der jeweiligen Zuführeinheit 12, 112 und führen diese auf jeweils einer Seite mit dem frisch extrudierten Träger 20 zusammen. Zusätzlich wirken die Walzen 34, 134 in der oben bereits beschriebenen Weise ebenfalls als Laminiereinheit 26.

Konkret führt eine auf einer Seite der Vorrichtung angeordnete erste Zuführeinheit 12 eine erste Folie 14 und eine auf der gegenüberliegenden Seite der Vorrichtung angeordnete zweite Zuführeinheit 112 eine zweite Folie 114 einem zentral angeordneten Walzenpaar 34, 134 zu, welches in bereits oben beschriebener Weise als integrale Zusammenführeinheit 24 und Laminiereinheit 26 wirken.

Die Walzen 34, 134 nehmen einerseits das frische Extrudat (Träger 20) auf und führen andererseits zwei Kunststofffolien 14, 114 jeweils mit dem Extrudat zusammen. Dabei wird hier die erste Kunststofffolie 14 auf die Oberseite (links) und die zweite Kunststofffolie 114 auf die Unterseite (rechts) des Trägers 20 aufgelegt.

Die Zusammenführeinheit 24 ist dabei so eingerichtet, dass ein Zusammenführen der Kunststofffolien 14, 114 und des frisch extrudierten Trägers 20 unmittelbar am oder nach dem Auslass des Extruders 18 realisiert ist. Somit kann eine kompakte Vorrichtung bei gleichzeitig maximaler Ausnutzung der noch vorhandenen Hitze des Extrudats (Träger 20) realisiert werden.

Im Folgenden laminieren dieselben Walzen 34, 134 den Träger 20 und die Folien 14, 114 durch Druckbeaufschlagung zu dem Laminat 28. Je nach der Restwärme und der noch vorhandener Fließfähigkeit des frisch extrudierten Trägers 20, d.h. des Schmelz- bzw. Glaszustands des Extrudats aus Kunststoff, kann dabei in der Regel eine Laminierung ohne weiteren Energieeintrag und/oder ohne die Verwendung zusätzlicher Klebstoffe durchgeführt werden.

Für den Fall, dass der Träger 20 lediglich auf einer Seite, z.B. der Oberseite, mit einer Kunststofffolie 14 beschichtet und laminiert, und insbesondere personalisiert werden soll, liegt auf der Hand, dass die in Fig. 1 gezeigte Ausführungsform ohne ein Abweichen von dem Erfindungsgedanken insoweit abänderbar ist, dass lediglich eine Zuführeinheit 12 vorhanden ist oder benutzt wird.

Die Bereitstelleinheit 30 ist hier nicht näher spezifiziert und verdeutlicht lediglich ein Bereitstellen eines Informationsträgers 10 in der bandförmigen Gestalt des Laminats 28. Bevorzugt wird hier als Bereitstelleinheit 30 eine Einrichtung zum Ausschneiden oder Ausstanzen von Informationsträgern 30 aus dem bandförmigen Laminat 28 vorgesehen werden, insbesondere zum Ausstanzen von Plastikkarten im üblichen Scheckkartenformat. Bei Bedarf kann das Laminat 28 hierzu stromaufwärts noch mit zusätzlichen Kühlwalzen und/oder einem zusätzlichen Kühlbad (beides nicht dargestellt) noch weiter abgekühlt und somit weiter verfestigt werden.

**Fig. 2** zeigt ein zweites nicht erfindungsgemäßes Beispiel einer Vorrichtung zur Herstellung eines flächigen Informationsträgers in einer schematischen seitlichen und teilweise geschnittenen Darstellung. Dieses Beispiel dient zum weiteren Verständnis der vorliegenden Erfindung und diesbezüglicher Merkmale.

Im Unterschied zu dem in Fig. 1 gezeigten Beispiel sind hier zwei Extruder 18, 118 vorgesehen, welche so eingerichtet sind, dass durch den ersten Extruder 18 - in Bandrichtung gesehen - eine obere Hälfte (links) des bandförmigen Trägers 20 und durch den zweiten Extruder 118 eine untere Hälfte (rechts) des bandförmigen Trägers 20 extrudierbar sind.

Dabei ist die Vorrichtung so eingerichtet, dass beim Extrudieren des bandförmigen Trägers 20 jeweils ein Chip, hier ein RFID-Chip, in den bandförmigen Träger 20 einbaubar ist, wobei der Chip zwischen den beiden Hälften einsetzbar ist, und die beiden Hälften mitsamt dem dazwischen angeordneten Chip zusammen zu dem bandförmigen Träger 20 laminierbar sind.

Die in den Träger 20 einzubauenden RFID-Chips werden dem Prozess dabei auf dem fortlaufenden Band 36 hintereinander angeordnet zugeführt.

Dieser Laminierprozess wird vorzugsweise gemeinsam mit dem Zusammenlaminieren der Kunststofffolie bzw. -folien 14, 114 mit dem frisch extrudierten Träger 20 durchgeführt.

Die Antennen der einzubauenden RFID-Chips können vor dem Einbau bzw. Einschweißen in den Träger 20 getestet werden, und der betreffende Chip kann im Falle eines Defekts aussortiert werden. Alternativ zu einem Aussortieren können die Drucker 16, 116 die Position des defekten Chips überspringen und die vorgesehene Information erst an der Stelle des nächsten Chips auf die bereitgestellten Kunststofffolien 14, 114 aufbringen.

In Bezug auf Fig. 2 ist ansonsten darauf zu verweisen, dass bereits in Fig. 1 dargestellte und diesbezüglich bereits weiter oben erläuterte Bezugszeichen aus Gründen der Übersichtlichkeit in Fig. 2 zum Teil nicht erneut aufgetragen worden sind und/oder anhand von Fig. 2 zum Teil nicht erneut erläutert werden. Für die Erläuterung solcher Bezugszeichen und der zugehörigen technischen Merkmale wird zur Vermeidung von Wiederholungen vollumfänglich auf die oben stehende Beschreibung zu Fig. 1 verwiesen. Dies gilt in entsprechender Weise auch für die nachfolgende Fig. 3.

**Fig. 3** zeigt ein bevorzugtes Ausführungsbeispiel der erfindungsgemäßen Vorrichtung in einer schematischen seitlichen und teilweise geschnittenen Darstellung. Gleichzeitig wird damit eine bevorzugte Ausgestaltung des erfindungsgemäßen Verfahrens erörtert.

Im Unterschied zu dem Beispiel aus Fig. 1 ist hier lediglich eine einzige Zuführeinheit 12, aber dennoch das Bereitstellen von zwei Kunststofffolien 14, 114 vorgesehen. Des Weiteren sind hier lediglich ein Drucker 16 und ein Trockner 32 realisiert worden. Der Drucker 16 bedruckt dabei die dargestellte Oberseite der Folienbahn 214.

Bei dieser Ausführungsform ist vor der Zusammenführeinheit 24 eine Schlitzeinheit 38 angeordnet, durch die eine einzige von der Zuführeinheit 12 bereitgestellte Folienbahn 214 in der Bahnrichtung gesehen in zwei Hälften geschlitzt wird, wodurch eine erste Kunststofffolie 14 und eine zweite Kunststofffolie 114 bereitgestellt werden. Dabei bildet die erste Hälfte (links) der Folienbahn 214 die erste Kunststofffolie 14, und die zweite Hälfte (rechts) der Folienbahn 214 bildet die zweite Kunststofffolie 114.

Zwischen der Schlitzeinheit 38 und der Zusammenführeinheit 24 sind auf der linken Seite zwei Umlenkeinheiten 40, 140 und auf der rechten Seite zwei Umlenkeinheiten 240, 340 angeordnet.

Durch die Umlenkeinheiten 40, 140 wird die bedruckte Seite der ersten Hälfte der Folienbahn 214, nämlich der ersten Kunststofffolie 14, so umgelenkt, dass sie der Oberseite (links) des frisch extrudierten Trägers 20 zugeführt wird.

Durch die Umlenkeinheiten 240, 340 wird die bedruckte Seite der zweiten Hälfte der Folienbahn 214, nämlich der zweiten Kunststofffolie 114, so umgelenkt, dass sie der Unterseite (rechts) des frisch extrudierten Trägers 20 zugeführt wird.

Insofern können aus einer bereitgestellten Folienbahn 214 sowohl die Kunststofffolie 14 für die Oberseite als auch die Kunststofffolie 114 für die Unterseite des Informationsträgers 10 bereitgestellt werden. Damit ist sichergestellt, dass zwischen Ober- und Unterseite keinerlei Unterschiede im verwendeten Folienmaterial existieren. Ferner werden sowohl Ober- als auch Unterseite des Informationsträgers 10 in einem Druckvorgang erschaffen, somit können ein Versatz bzw. Diskrepanzen zwischen dem Druckbild auf Vorder- und Rückseite des Informationsträgers 10 vermieden werden.

### Bezugszeichenliste

- 10: Informationsträger
- 12: erste Zuführeinheit, einzige Zuführeinheit
- 112: zweite Zuführeinheit
- 14: erste Kunststofffolie
- 114: zweite Kunststofffolie
- 214: Folienbahn
- 16: erster Drucker, einziger Drucker
- 116: zweiter Drucker
- 18: Extruder, erster Extruder
- 118: zweiter Extruder
- 20: Träger
- 22: Kunststoffmasse
- 24: Zusammenführeinheit
- 26: Laminiereinheit
- 28: Laminat
- 30: Bereitstelleinheit
- 32, 132: Trockner
- 34, 134: Walze
- 36: fortlaufendes Band (mit RFID-Chips)
- 38: Schlitzeinheit
- 40, 140, 240, 340: Umlenkeinheit

## Patentansprüche

1. Verfahren zur Herstellung eines flächigen Informationsträgers (10) aus Kunststoff, umfassend die folgenden Schritte:
- Bereitstellen einer Kunststofffolie (14, 114)
- Bedrucken der Kunststofffolie (14, 114) mit Informationen
- Extrudieren eines bandförmigen Trägers (20) aus einer erhitzten, fließfähigen Kunststoffmasse (22)
- Zusammenführen der Kunststofffolie (14, 114) und des frisch extrudierten Trägers (20)
- Laminieren der Kunststofffolie (14, 114) zusammen mit dem frisch extrudierten Träger (20) zu einem Laminat (28)
- Ausstanzen, Zuschneiden oder sonstiges Bereitstellen des Informationsträgers (10) aus dem Laminat (28);
wobei zwei Kunststofffolien (14, 114) bereitgestellt werden, wobei eine erste Kunststofffolie (14) der Oberseite und eine zweite Kunststofffolie (114) der Unterseite des frisch extrudierten Trägers (20) zugeführt und jeweils dort zusammen mit dem Träger (20) laminiert werden,
**dadurch gekennzeichnet, dass** die erste Kunststofffolie (14) und die zweite Kunststofffolie (114) dadurch bereitgestellt werden, dass eine einzige Folienbahn (214) bereitgestellt und in der Bahnrichtung gesehen in zwei Hälften geschlitzt wird, wobei die erste Hälfte der Folienbahn (214) die erste Kunststofffolie (14) und die zweite Hälfte der Folienbahn (214) die zweite Kunststofffolie (114) bildet.

2. Verfahren nach Anspruch 1, **dadurch gekennzeichnet, dass** das Laminieren der Kunststofffolien (14, 114) zusammen mit dem Träger (20) unter mechanischem Druck, insbesondere zwischen zwei Walzen (34, 134), durchgeführt wird.

3. Verfahren nach Anspruch 1 oder 2, **dadurch gekennzeichnet, dass** das Laminieren der Kunststofffolien (14, 114) zusammen mit dem Träger (20) unter Ausnutzung der Restwärme und/oder der nach der Extrusion noch bestehenden Fließfähigkeit des frisch extrudierten Trägers (20) durchgeführt wird.

4. Verfahren nach einem der Ansprüche 1 bis 3, **dadurch gekennzeichnet, dass** eine zumindest teilweise transparente Kunststofffolie (14, 114) bereitgestellt wird, und dass die Kunststofffolie (14, 114) auf der dem Träger (20) zugewandten Seite bedruckt wird.

5. Verfahren nach einem der Ansprüche 1 bis 4, **dadurch gekennzeichnet, dass** die erste Kunststofffolie (14) und die zweite Kunststofffolie (114) jeweils auf der dem Träger (20) zugewandten Seite mit Informationen in gespiegelter Anordnung bedruckt werden, wobei die erste Kunststofffolie (14) die Vorderseite und die zweite Kunststofffolie (114) die Rückseite des flächigen Informationsträgers (10) bildet.

6. Verfahren nach einem der Ansprüche 1 bis 5, **dadurch gekennzeichnet, dass** die Folienbahn (214) vor dem Aufschlitzen bedruckt wird, wobei die erste Hälfte der Folienbahn (214) mit der späteren Vorderansicht und die zweite Hälfte der Folienbahn (214) mit der späteren Rückansicht des flächigen Informationsträgers (10) bedruckt wird, und wobei jede Hälfte der Folienbahn (214) so umgelenkt wird, dass die bedruckte Seite der ersten Hälfte der Oberseite und die bedruckte Seite der zweiten Hälfte der Unterseite des frisch extrudierten Trägers (20) zugeführt werden.

7. Verfahren nach einem der Ansprüche 1 bis 6, **dadurch gekennzeichnet, dass** beim Extrudieren des bandförmigen Trägers (20) jeweils ein Chip, insbesondere ein RFID-Chip oder dergleichen Transponder, in den bandförmigen Träger (20) eingebaut wird.

8. Verfahren nach Anspruch 7, **dadurch gekennzeichnet, dass** zwei Extruder (18, 118) eingesetzt werden, wobei der erste Extruder (18) - in Bandrichtung gesehen - eine obere Hälfte des bandförmigen Trägers (20) und der zweite Extruder (118) eine untere Hälfte des bandförmigen Trägers (20) extrudiert, der Chip zwischen den beiden Hälften eingesetzt wird, und die beiden Hälften mitsamt dem dazwischen angeordneten Chip zusammen zu dem bandförmigen Träger (20) laminiert werden.

9. Vorrichtung zur Herstellung eines flächigen Informationsträgers (10) aus Kunststoff, insbesondere nach einem Verfahren nach einem der vorhergehenden Ansprüche, umfassend die folgenden Funktionseinheiten:
- eine Zuführeinheit (12, 112) zum Bereitstellen einer Kunststofffolie (14, 114)
- einen Drucker (16, 116) zum Bedrucken der Kunststofffolie (14, 114) mit Informationen
- einen Extruder (18, 118) zum Extrudieren eines bandförmigen Trägers (20) aus einer erhitzten, fließfähigen Kunststoffmasse (22)
- eine Zusammenführeinheit (24) zum Zusammenführen der Kunststofffolie (14, 114) und des frisch extrudierten Trägers (20)
- eine Laminiereinheit (26) zum Laminieren der Kunststofffolie (14, 114) zusammen mit dem frisch extrudierten Träger (20) zu einem Laminat (28)
- eine Bereitstelleinheit (30) zum Ausstanzen, Zuschneiden oder sonstigen Bereitstellen des Informationsträgers (10) aus dem Laminat (28),
**dadurch gekennzeichnet, dass** eine einzige Zuführeinheit (12) und das Bereitstellen von zwei Kunststofffolien (14, 114) vorgesehen sind, wobei vor der Zusammenführeinheit (24) eine Schlitzeinheit (38) angeordnet ist, durch die eine erste Kunststofffolie (14) und eine zweite Kunststofffolie (114) dadurch bereitstellbar sind, dass eine einzige von der Zuführeinheit (12) bereitgestellte Folienbahn (214) in der Bahnrichtung gesehen in zwei Hälften geschlitzt wird, wobei die erste Hälfte der Folienbahn (214) die erste Kunststofffolie (14) und die zweite Hälfte der Folienbahn (214) die zweite Kunststofffolie (114) bildet.

10. Vorrichtung nach Anspruch 9, **dadurch gekennzeichnet, dass** die Laminiereinheit (26) zwei gegeneinander gerichtete, mit Druck beaufschlagbare Walzen (34, 134) aufweist, insbesondere wobei die Walzen (34, 134) kühlbar sind.

11. Vorrichtung nach Anspruch 9 oder 10, **dadurch gekennzeichnet, dass** die erste Kunststofffolie (14) der Oberseite und die zweite Kunststofffolie (114) der Unterseite des frisch extrudierten Trägers (20) zuführbar sind.

12. Vorrichtung nach einem der Ansprüche 9 bis 11, **dadurch gekennzeichnet, dass** zwischen der Schlitzeinheit (38) und der Zusammenführeinheit (24) Umlenkeinheiten (40, 140, 240, 340) angeordnet sind, durch die jede Hälfte der Folienbahn (214) so umlenkbar ist, dass die bedruckte Seite der ersten Hälfte der Oberseite und die bedruckte Seite der zweiten Hälfte der Unterseite des frisch extrudierten Trägers (20) zuführbar sind.

13. Vorrichtung nach einem der Ansprüche 9 bis 12, **dadurch gekennzeichnet, dass** zwei Extruder (18, 118) vorgesehen sind, welche so eingerichtet sind, dass durch den ersten Extruder (18) - in Bandrichtung gesehen - eine obere Hälfte des bandförmigen Trägers (20) und durch den zweiten Extruder (118) eine untere Hälfte des bandförmigen Trägers (20) extrudierbar sind.

14. Vorrichtung nach Anspruch 13, **dadurch gekennzeichnet, dass** beim Extrudieren des bandförmigen Trägers (20) jeweils ein Chip, insbesondere ein RFID-Chip oder dergleichen Transponder, in den bandförmigen Träger (20) einbaubar ist.

15. Vorrichtung nach Anspruch 14, **dadurch gekennzeichnet, dass** der Chip zwischen den beiden Hälften einsetzbar ist, und die beiden Hälften mitsamt dem dazwischen angeordneten Chip zusammen zu dem bandförmigen Träger (20) laminierbar sind.

## Claims

1. A method for producing a flat information carrier (10) from synthetic material, comprising the steps of:
- providing a synthetic film (14, 114)
- printing information onto the synthetic film (14, 114)
- extruding a band-like carrier (20) from a heated, flowable synthetic material mass (22)
- contacting the synthetic film (14, 114) and the freshly extruded carrier (20) to form a laminate (28)
- punching out, cutting to size or otherwise providing the information carrier (10) from the laminate (28);
wherein two synthetic films (14, 114) are provided, a first synthetic film (14) being fed to the top side and a second synthetic film (114) being fed to the bottom side of the freshly extruded carrier (20) and being laminated thereto together with the carrier (20), respectively,
**characterized in that** the first synthetic film (14) and the second synthetic film (114) are provided by providing a single film web (214) and slitting it into two halves as viewed in the web direction, the first half of the film web (214) forming the first synthetic film (14) and the second half of the film web (214) forming the second synthetic film (114).

2. The method according to claim 1, **characterized in that** laminating the synthetic films (14, 114) and the carrier (20) is performed under mechanical pressure, especially between two rollers (34, 134).

3. The method according to claim 1 or 2, **characterized in that** laminating the synthetic films (14, 114) and the carrier (20) is performed utilizing the residual heat and/or the flowability of the freshly extruded carrier (20) still existing after the extrusion.

4. The method according to one of the claims 1 to 3, **characterized in that** an at least partially transparent synthetic film (14, 114) is provided, and that the synthetic film (14, 114) is printed onto the side facing the carrier (20).

5. The method according to one of the claims 1 to 4, **characterized in that** the first synthetic film (14) and the second synthetic film (114) are each printed with information in a mirrored arrangement on the side facing the carrier (20), the first synthetic film (14) forming the front side and the second synthetic film (114) forming the back side of the flat information carrier (10).

6. The method according to one of the claims 1 to 5, **characterized in that** the film web (214) is printed prior to slitting, wherein the prospective front view is printed onto the first half of the film web (214) and the prospective rear view of the flat information carrier (10) is printed onto the second half of the film web (214), and wherein each half of the film web (214) is deflected such that the printed side of the first half is fed to the top side and the printed side of the second half is fed to the bottom side of the freshly extruded carrier (20).

7. The method according to one of the claims 1 to 6, **characterized in that** when extruding the band-like carrier (20), a chip, especially an RFID chip or any equivalent transponder, is incorporated into the respective band-like carrier (20).

8. The method according to claim 7, **characterized in that** two extruders (18, 118) are used, the first extruder (18) - as viewed in the direction of the strip - extruding a top half of the band-like carrier (20) and the second extruder (118) extruding a bottom half of the band-like carrier (20), the chip being inserted between the two halves, and the two halves and the chip arranged therebetween are laminated to each other to form the band-like carrier (20).

9. A device for producing a flat information carrier (10) from synthetic material, especially according to a method according to one of the preceding claims, the device comprising the following operational units:
- a feeder unit (12, 112) for providing a synthetic film (14, 114)
- a printer (16, 116) for printing information onto the synthetic film (14, 114)
- an extruder (18, 118) for extruding a band-like carrier (20) from a heated, flowable synthetic material mass (22)
- a contacting unit (24) for contacting the synthetic film (14, 114) and the freshly extruded carrier (20)
- a laminating unit (26) for laminating the synthetic film (14, 114) and the freshly extruded carrier (20) to form a laminate (28)
- a provisioning unit (30) for punching, cutting to size or otherwise providing the information carrier (10) from the laminate (28),
**characterized in that** a single feeder unit (12) and the provision of two synthetic films (14, 114) are provided, a slitting unit (38) being arranged upstream of the contacting unit (24), which is used to provide a first synthetic film (14) and a second synthetic film (114), **in that** a single film web (214) provided by the feeder unit (12) is slit into two halves as seen in the web direction, the first half of the film web (214) forming the first synthetic film (14) and the second half of the film web (214) forming the second synthetic film (114).

10. The device according to claim 9, **characterized in that** the laminating unit (26) comprises two rollers (34, 134) which are directed towards each other and are pressurizable, especially wherein the rollers (34, 134) are coolable.

11. The device according to claim 9 or 10, **characterized in that** the first synthetic film (14) is feedable to the top side and the second synthetic film (114) is feedable to the bottom side of the freshly extruded substrate (20).

12. The device according to one of the claims 9 to 11, **characterized in that** deflection units (40, 140, 240, 340) are arranged between the slitting unit (38) and the contacting unit (24), which are used to deflect each half of the film web (214) such that the printed side of the first half is feedable to the top side and the printed side of the second half is feedable to the bottom side of the freshly extruded carrier (20).

13. The device according to one of the claims 9 to 12, **characterized in that** two extruders (18, 118) are provided, which are arranged such that an top half of the band-like carrier (20) is extrudable by the first extruder (18) - as seen in the direction of the band - and a bottom half of the band-like carrier (20) is extrudable by the second extruder (118).

14. The device according to claim 13, **characterized in that** during extrusion of the band-like carrier (20), a chip, especially an RFID chip or similar transponder, is integrateable into the respective band-like carrier (20).

15. The device according to claim 14, **characterized in that** the chip is insertable between the two halves, and the two halves and the chip arranged therebetween are laminateable to each other to form the band-like carrier (20).

## Revendications

1. Procédé de fabrication d'un support d'informations plan (10) en matière plastique, comprenant les étapes suivantes :
- la préparation d'un film plastique (14, 114)
- l'impression d'informations sur le film plastique (14, 114)
- l'extrusion d'un support en forme de bande (20) à partir d'une masse plastique (22) chauffée et fluide.
- la mise en contact du film plastique (14, 114) et le support (20) fraîchement extrudé
- stratification du film plastique (14, 114) avec le support fraîchement extrudé (20) pour former un stratifié (28)
- découpe, découpage en forme ou autre mise à disposition du support d'informations (10) à partir du stratifié (28) ;
dans lequel deux films plastiques (14, 114) sont fournis, un premier film plastique (14) étant fourni à la face supérieure et un second film plastique (114) étant fourni à la face inférieure du support fraîchement extrudé (20) et étant respectivement stratifié à cet endroit avec le support (20),
**caractérisé en ce que** le premier film plastique (14) et le deuxième film plastique (114) sont préparés en fournissant une seule bande de film (214) et en la découpant en deux moitiés dans le sens de la bande, la première moitié de la bande de film (214) formant le premier film plastique (14) et la deuxième moitié de la bande de film (214) formant le deuxième film plastique (114).

2. Procédé selon la revendication 1, **caractérisé en ce que** la stratification des films plastiques (14, 114) est réalisé avec le support (20) sous pression mécanique, notamment entre deux cylindres (34, 134).

3. Procédé selon la revendication 1 ou 2, **caractérisé en ce que** la stratification des films plastiques (14, 114) avec le support (20) est réalisée en utilisant la chaleur résiduelle et/ou la fluidité du support (20) fraîchement extrudé qui subsiste après l'extrusion.

4. Procédé selon l'une des revendications 1 à 3, **caractérisé en ce qu'un** film plastique (14, 114) au moins partiellement transparent est fourni, et **en ce que** le film plastique (14, 114) est imprimé sur la face tournée vers le support (20).

5. Procédé selon l'une des revendications 1 à 4, **caractérisé en ce que** le premier film plastique (14) et le deuxième film plastique (114) sont imprimés avec des informations dans une disposition inversée sur la face tournée vers le support (20), le premier film plastique (14) formant la face avant et le deuxième film plastique (114) la face arrière du support d'informations plan (10).

6. Procédé selon l'une des revendications 1 à 5, **caractérisé en ce que** la bande de film (214) est imprimée avant d'être découpée, la première moitié de la bande de film (214) étant imprimée avec la future vue avant et la deuxième moitié de la bande de film (214) étant imprimée avec la future vue arrière du support d'informations plan (10), et dans lequel chaque moitié de la bande de film (214) est déviée de manière à ce que la face imprimée de la première moitié soit fournie à la face supérieure et la face imprimée de la deuxième moitié soit fournie à la face inférieure du support (20) fraîchement extrudé.

7. Procédé selon l'une des revendications 1 à 6, **caractérisé en ce que** lors de l'extrusion du support en forme de bande (20), une puce, notamment une puce RFID ou un transpondeur similaire, est respectivement intégrée dans le support en forme de bande (20).

8. Procédé selon la revendication 7, **caractérisé en ce que** deux extrudeuses (18, 118) sont employées, la première extrudeuse (18) extrudant - vu dans le sens de la bande - une moitié supérieure du support en forme de bande (20) et la deuxième extrudeuse (118) extrudant une moitié inférieure du support en forme de bande (20), la puce étant insérée entre les deux moitiés, et les deux moitiés, y compris la puce disposée entre elles, étant stratifiées ensemble pour former le support en forme de bande (20).

9. Dispositif pour la fabrication d'un support d'informations plan (10) en matière plastique, en particulier selon un procédé selon l'une des revendications précédentes, comprenant les unités opérationnelles suivantes :
- une unité d'alimentation (12, 112) pour fournir un film plastique (14, 114)
- une imprimante (16, 116) pour imprimer des informations sur le film plastique (14, 114)
- une extrudeuse (18, 118) pour extruder un support en forme de bande (20) à partir d'une masse plastique chauffée et fluide (22)
- une unité de mise en contact (24) pour mettre en en contact le film plastique (14, 114) et le support fraîchement extrudé (20)
- une unité de stratification (26) pour stratifier le film plastique (14, 114) avec le support fraîchement extrudé (20) en un stratifié (28)
- une unité de mise à disposition (30) pour découper, couper ou mettre à disposition d'une autre manière le support d'informations (10) à partir du stratifié (28),
**caractérisé en ce qu'il** est prévu une seule unité d'alimentation (12) et la mise à disposition de deux films plastiques (14, 114), une unité de découpage (38) étant disposée avant l'unité de mise en contact (24), par laquelle un premier film plastique (14) et un deuxième film plastique (114) peuvent être mis à disposition, qu'une seule bande de film (214) mise à disposition par l'unité d'alimentation (12) est découpée en deux moitiés, vu dans le sens de la bande, la première moitié de la bande de film (214) formant le premier film plastique (14) et la deuxième moitié de la bande de film (214) formant le deuxième film plastique (114).

10. Dispositif selon la revendication 9, **caractérisé en ce que** l'unité de stratification (26) présente deux rouleaux (34, 134) dirigés l'un vers l'autre et pouvant être soumis à une pression, en particulier les rouleaux (34, 134) pouvant être refroidis.

11. Dispositif selon la revendication 9 ou 10, **caractérisé en ce que** le premier film plastique (14) peut être amené sur la face supérieure et le deuxième film plastique (114) sur la face inférieure du support (20) fraîchement extrudé.

12. Dispositif selon l'une quelconque des revendications 9 à 11, **caractérisé en ce que** des unités de déviation (40, 140, 240, 340) sont disposées entre l'unité de découpage (38) et l'unité de mise en contact (24), par lesquelles chaque moitié de la bande de film (214) peut être déviée de telle sorte que la face imprimée de la première moitié peut être amenée à la face supérieure et la face imprimée de la deuxième moitié peut être amenée à la face inférieure du support fraîchement extrudé (20).

13. Dispositif selon l'une des revendications 9 à 12, **caractérisé en ce qu'il** est prévu deux extrudeuses (18, 118) qui sont agencées de telle sorte qu'une moitié supérieure du support en forme de bande (20) - vu dans le sens de la bande - puisse être extrudée par la première extrudeuse (18) et qu'une moitié inférieure du support en forme de bande (20) puisse être extrudée par la deuxième extrudeuse (118).

14. Dispositif selon la revendication 13, **caractérisé en ce que** lors de l'extrusion du support en forme de bande (20), une puce, en particulier une puce RFID ou un transpondeur similaire, peut être intégrée dans le support en forme de bande (20).

15. Dispositif selon la revendication 14, **caractérisé en ce que** la puce peut être insérée entre les deux moitiés, et **en ce que** les deux moitiés, y compris la puce disposée entre elles, peuvent être stratifiées l'une avec l'autre pour former le support en forme de bande (20).
